# EUROPEAN PATENT SPECIFICATION

(11) **EP 2 289 140 B1**
(45) Date of publication and mention of the grant of the patent: **12.09.2018**
(21) Application number: 08743412.2
(22) Date of filing: 30.04.2008
(51) Int. Cl.: H02J 1/00, G06F 1/26

(54) **SYSTEM AND METHOD FOR EFFICIENT ASSOCIATION OF A POWER OUTLET AND DEVICE**
SYSTEM UND VERFAHREN ZUM EFFIZIENTEN ASSOZIIEREN EINER STECKDOSE UND EINES GERÄTS
SYSTÈME ET PROCÉDÉ POUR L'ASSOCIATION EFFICACE D'UNE PRISE DE COURANT ET D'UN DISPOSITIF

(43) Date of publication of application: 02.03.2011
(73) Proprietor: Sunbird Software, Inc., Somerset, New Jersey 08873 (US)
(72) Inventor: HOLOVACS, Jayson, T., Dunellen, NJ 08812 (US); WEINSTOCK, Neil, Randolph, NJ 07869 (US); SOMASUNDARAM, Siva, Dayton, NJ 08810 (US)
(74) Representative: Williams, David John
(86) International application number: PCT/US2008/005533
(87) International publication number: WO 2009/134222

(56) References cited:
- WO-A1-2006/055163
- US-A1- 2004 051 397
- US-A1- 2007 010 916
- US-A1- 2007 273 208
- US-B1- 6 413 104

## Description

### TECHNICAL FIELD

This invention relates generally to power distribution devices, such as, power strips, and more particularly to power distribution units having certain intelligent capabilities.

### BACKGROUND OF THE INVENTION

Intelligent power distribution devices offer enhanced power distribution and monitoring capabilities for certain sensitive electrical and electronic applications. An exemplary application where deployment of intelligent power distribution devices has proven useful is in the powering of multiple computer servers that are involved in the provision of network services. Here, the ability to control and monitor power distribution can prove to be an invaluable tool for computer network operators and IT personnel.

One known intelligent power device of the above-described type is the Dominion PX Intelligent Power Distribution Unit (IPDU), developed and sold by Raritan Corp. of Somerset, New Jersey. The Dominion PX IPDU offers increased operational and monitoring capabilities at each of the AC power outlets included in the device. Generally, these capabilities will include the ability to turn an outlet on and off, and also provide power consumption measurements for that outlet, among other features. In order for these capabilities to be at all useful, it is necessary for the intelligent power device or equipment monitoring the intelligent power device to know what specific equipment is at the other end of a power cable plugged into each outlet of the intelligent power device.

At present, the only way to determine what equipment is associated with specific outlets of an intelligent power distribution device is to have that information manually entered. Such a manual association process may be inconvenient, subject to error and require additional manual updates any time a configuration change takes place.

US 2007/273208 discloses an automatic sensing power system which automatically determines a power requirement for an electrical device.

### SUMMARY OF THE INVENTION

An advance is made over the prior art in accordance with the principles of the present invention that is directed to a system and method for providing automatic or semi-automatic identity association between an outlet of an intelligent power distribution unit and a target device, such as a computer server, which is powered by that outlet. The association is accomplished by enabling identification information to be transmitted between an identification device near or within the target device and the intelligent power distribution unit via a power cable. The power cable may include a specialized interface for mating with the power distribution unit and/or providing the identification information.

In one aspect of the present invention there is provided a system according to claim 1. In another aspect of the present invention there is provided a method according to claim 8.

Further aspects of the invention are outlined in the dependent claims. Embodiments which do not fall within the scope of the claims do not describe part of the present invention.

In one described arrangement, a target device is supplied power from a specific outlet of an intelligent power distribution unit. The system contains an identification device proximate the target device for receiving identification information from the target. Further, the cable for supplying power between the target device and the intelligent power distribution unit enables communication of identification information between the identification device and the intelligent power distribution unit.

In another described arrangement, a system is disclosed for automatically associating an electrical device with a electrical outlet. Wherein, the system contains an identification generating circuit for producing at least one signal used to uniquely identify the electrical device. The system further contains a first identification signal transceiver located proximate the electrical device and electrically connected to the identification generating circuit, and a second identification signal transceiver located proximate to and associated with the electrical outlet. A communications channel is disposed between the first identification signal transceiver and said second identification signal transceiver and is used to pass signals between the transceivers.

### BRIEF DESCRIPTION OF THE DRAWING

The teachings of the present invention can be readily understood by considering the following detailed description in conjunction with the accompanying drawings, in which:
FIG. 1 shows one exemplary embodiment of a system for providing reliable association information between a target device and intelligent power distribution unit;
FIG. 2 shows another exemplary embodiment of a system for providing identification association between a target device and intelligent power distribution unit;
FIGs. 3 and 4 show alternative exemplary embodiments for associating a target device to an intelligent power distribution unit using power conductors of a power cable to provide communication;
FIGs. 5 and 6 show an exemplary illustration of a coupling mechanism between the intelligent power distribution unit and specialized power cable;
FIG. 7 shows another exemplary embodiment of a coupling mechanism between the intelligent power distribution unit and specialized power cable according to the present invention.

### DETAILED DESCRIPTION

Exemplary embodiments of the invention will now be described while referring to the figures, several of which may be simultaneously referred to during the course of the following description.

The present invention discloses a system and method for providing automatic or semi-automatic identity association between an outlet of an intelligent power distribution unit and a target device, such as a computer server, which is powered by that outlet.

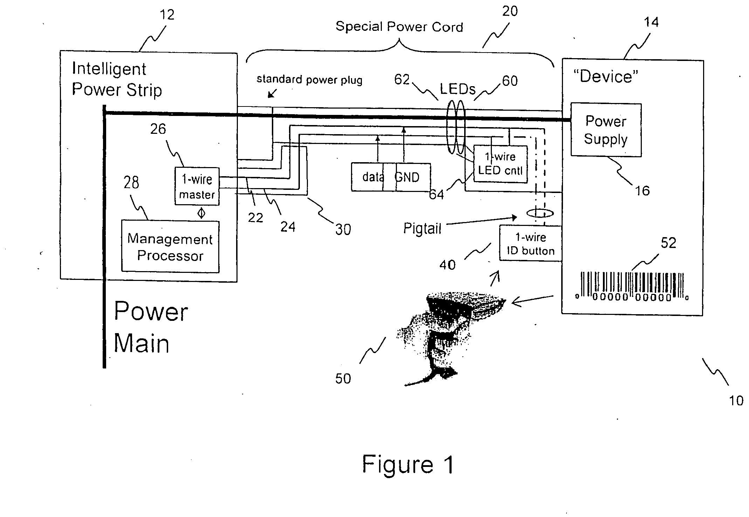

Referring to Fig. 1, there is shown one exemplary embodiment of a system 10 in accordance with the present invention for enabling substantially automatic identity association between an intelligent power distribution unit 12 and a target device 14, where the target device is an electrical device includes or utilizes a power supply 16 that is powered by the intelligent power distribution unit 12. As shown, the system 10 includes a specialized power cable 20 for providing AC power and current from an outlet of the power distribution unit (PDU) 12. As would be understood, the power cable 20 includes at least two power conductors for providing AC power and may or may not include a separate ground conductor depending on the power system and the country in which the system is utilized. The standard power connections of the power cable mate between the power distribution unit and the target device in a known manner.

In addition to the power connection conductors described above, the specialized power cable 20 includes two additional conductors, e.g., a data conductor 22 and ground 24 (sometimes referred to collectively as data conductors), for enabling identity data to be transmitted between the power distribution unit and target device. Although the shown embodiment is illustrated as including two additional conductors, another possible configuration includes a single data conductor, where the single data line makes use of the AC ground for its reference. Such a configuration may not be eligible, however, for approval by certification agencies or other approval agencies in a number of regions. Additional data and/or power conductors may also be included as part of the specialized power cord.

As shown, the data conductor 22 of the power cable couples on the power distribution unit side to a controller 26 within the power distribution unit 12. The controller 26, which acts as a transceiver to transmit and receive identification data from Device 14, in turn, couples to a management module or processor 28 within the power distribution unit 12. In a unique feature of the present invention, the data conductors 22, 24 of the specialized power cable 20 couple to the power distribution unit 12 by way of connections which are made, for example, through a latch unit 30 on the power distribution unit 12 and a corresponding latch plate receiving section on the collar of the power cable 20. In this way, standard methodologies of making power connections between the power distribution unit and target device are kept intact, e.g., standard two and three prong connectors. The latch unit 30 and coupling mechanism to the power cable are designed in order to keep the data conductors isolated from one another. Specific embodiments of coupling mechanisms between the power cable and the power distribution unit are described in greater detail herein. Various other designs of locking and latching mechanisms that provide coupling (and isolation) of the data conductors to the power distribution unit may also be utilized. Besides utilization of locking mechanisms, other means of securely coupling the data conductors to the power distribution unit may also be utilized.

On the opposite side of the power cable, the data conductors 22, 24 couple to an identification (ID) device 40. This would generally include a programmable memory component, such as a Read-Only Memory (ROM) or non-volatile RAM. Exemplary devices of this type are memory devices from Maxim Integrated Products of Sunnyvale, CA (formerly Dallas Semiconductor) that utilize the 1-Wire® protocol. The 1-Wire protocol uses a signaling scheme that performs half-duplex bidirectional communications between a host/master controller and one or more slaves sharing a common data line. Both power and data communication for slave devices are transmitted over this single line. For power delivery, slaves capture charge on an internal capacitor when the line is in a high state and then use this charge for device operation when the line is low during data transmission. The ID device 40 forms part of the identification generating circuit and is attachable to or is in an area near the target device 14 and its power input, where the ID device is powered through the data conductors as described above. The ID device 40 is programmed to provide the power distribution unit 12, via a communications channel, such as the data conductors 22, 24, with a machine readable identification, for example a unique address number, for the target device 14.

The ID Device 40 could be programmed by any method that would give it unique information about the target device 14 usable to identify the target device. In one embodiment of the invention, the programming of the ID device is accomplished by means of a custom barcode reader 50. The barcode reader 50 enables a technician at setup to read an associated bar code 52 off of the server identification tag or asset management tag and transmit this barcode scan to the memory of the ID device 40. The transfer of information between the barcode scanner and the ID device may be accomplished via wired or wireless interface in a known manner. The bar code of the server identification tag will typically include either asset management tag information or server serial number information or any other like information for uniquely identifying the computer server target devices.

In one embodiment of the invention, the ID device 40 is attached to the data conductors of the power cable 20, wherein the data conductors pigtail off of the power cable at the target end of the cable so as to enable a desired placement of the ID device in the vicinity of the target device. As would be understood, the data lines of the power cord terminate by way of a standardized connector, where the connector is made to mate with a corresponding connector on the ID device. In this way, ID devices can remain with the corresponding target equipment and programming of an ID device need only be accomplished once. In addition, the ID devices can be replaceable if desired, in the case of equipment failure at either the target or ID device itself. As an alternative method of programming the ID Device 40, the server identification tags could also be in the form of Radio Frequency Identification ("RFID") tags, where information from the RFID tags may be obtained via an RFID reader. The RFID reader could be incorporated into the ID Device 40 or could be a separate device with an interface to the ID Device similar to the barcode reader. As a further alternative, the ID Device 40 would couple externally (and perhaps temporarily) to the target device 14 through a cable, for example, a USB cable. A software application would be loaded on the target device which automatically loads identification information from the target device to the ID Device when prompted. The software application could be loaded to the target device along with other applications at configuration time or by way of a virtual media link or other like download, where KVM (keyboard-video-mouse) type equipment would have access to the target devices to enable the software download. In the descriptions of embodiments of the innovation below, barcode readers are referred to as illustrative and it should be understood that such reference includes any method for detecting uniquely identifying information

Referring still to Fig. 1, an additional useful functionality of a visual indicator is included in combination with the power cable 20 as shown. An LED 60 is placed on the target device end of the cable, ideally around the collar 62 of the power connector for maximum visibility. This LED 60 is powered and controlled by the data lines, and may provide (a) a useful indicator of whether power is enabled to the device, and (b) a marker for devices that are targeted for maintenance, to allow a repair technician to positively identify the device. An LED controller 64, for example, DS2413, manufactured by Dallas Semiconductor/Maxim Integrated Products, may be suitable for controlling one or more LEDs via the data lines. An LED device capable of producing multiple colors indicative of differing status conditions may also be utilized in connection with the LED controller. Another feature of the present invention power cable is that the LED may be manually operated by way of a button or other type switch which is included on one or both sides of the power cable. In this way, a visual indication regarding a specific power cable under deployment may be readily available to a technician. Such a feature would be advantageous when attempting to locate a specific cable among a large number of other like cables. Other types of indications, for example, audible indications, are also possible in connection with the present invention and the disclosed architecture.

Because the power cable 20 of the present invention contains an embedded control device (for controlling the LED), the intelligent power distribution unit can distinguish between (a) disconnection of the ID device, and (b) complete disconnection of the cord lock/lwire bus. Having the ability to report this level of device connection status is extremely useful when attempting to report and resolve connection failures in an intelligent manner.

In addition, by being able to make accurate associations between target devices 14 and the intelligent power distribution units 12 by way of the ID devices 40, improved monitoring capabilities are enabled for the entire system making use of intelligent power distribution units. For example, monitoring of the ID devices 40, once association to a target device is made, enables the intelligent power distribution device to:
a) Detect change of target ID on an outlet. Exemplary options for handling this type of condition are to send an alarm, for example, to the monitoring system, disable the corresponding outlet until the configuration is fixed, or do nothing.
b) Detect lack of target ID. This indicates that either the connection to the ID tag has failed, or else the ID tag simply has not been connected. The options again are to send an alarm, disable until fixed, or do nothing.
c) Detect an inconsistent configuration. This condition could occur, for example, if separate intelligent power distribution units detect connection to different outlets for the same target (or even the same outlet). In the case of connection to different outlets, this may be acceptable, if power redundancy is utilized at the server. However, in any case, if we know the physical locations of the power distribution units, an inconsistent configuration can be detected and we may conclude that something has gone wrong, and can generate an alarm accordingly.
d) Detect loss of connection to target ID. Assume that an exemplary power distribution policy is to require every outlet to be correctly tagged, else power cannot be enabled. If, for example, the ID device is inadvertently disconnected, by having the capabilities of the present invention, rather than shut down the target, we can see if power continues to flow to the device. If power does continue to flow, we send an alarm, for example, but don't lock out power until the outlet is disconnected or the device is shut down.

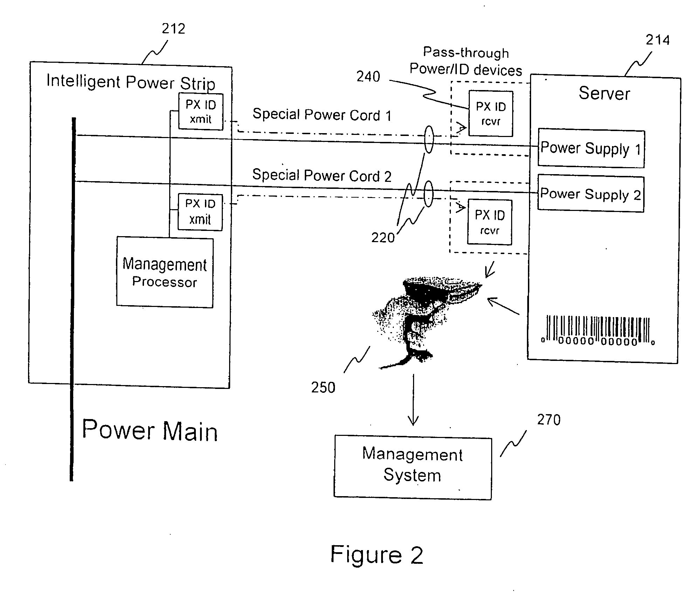

Referring to Fig. 2, another embodiment for improved association between a power distribution unit 212 and a target device 214 is described. Here, the same basic configuration of equipment is utilized for the power distribution unit 212, power cable 220 and ID device receiver 240. In this described embodiment, the power distribution unit 212 distributes a unique identity of the power distribution device and the power outlet to the ID receiver device 240 at the target device 214 or server. The association is then done in a portable device like a barcode scanner 250. That is, the power distribution unit 212, e.g., power strip, communicates a value associated with its ID and the ID of the outlet over the power cable 220, where it is placed into readable form at the end of the cable, for example, in the ID device receiver 240. The distribution of addresses from the power distribution unit can be based, for example, on information that is provided to the PDUs from a management system. In addition, detailed custom identification information (as opposed to more simple address information) could also be loaded to the ID devices based on that information being cascaded from the management system to the PDUs and then to the ID devices. Another alternative is that a default set of addresses is always provided from the PDU to corresponding ID devices and therefore, the association mechanism need also keep track of the specific PDU identification, e.g., a PDU number, in order to make a proper association.

After connecting the power cord to an outlet of the power distribution unit in order to download identification information to the ID devices, an individual uses the barcode scanner 250 (or similarly functioning device) to scan the server's barcode (or other like pertinent information), and then "reads" the end of each power cable to create an association inside the barcode scanner. The association information is uploaded to a management system 270 or database, either in real time if there is an active connection between the detecting device and the management system or at a later time when such a connection can be made. Since the flow of information to the ID receiver device is unidirectional, devices utilizing a bidirectional communication protocol need not be utilized, as would be understood by those skilled in the art.

While this system is manual in some respects, it automatically brings the power socket ID to the exact location at the back of the server. Accordingly, the effort and potential for error in tracing the power cable from the server input to the power strip is eliminated.

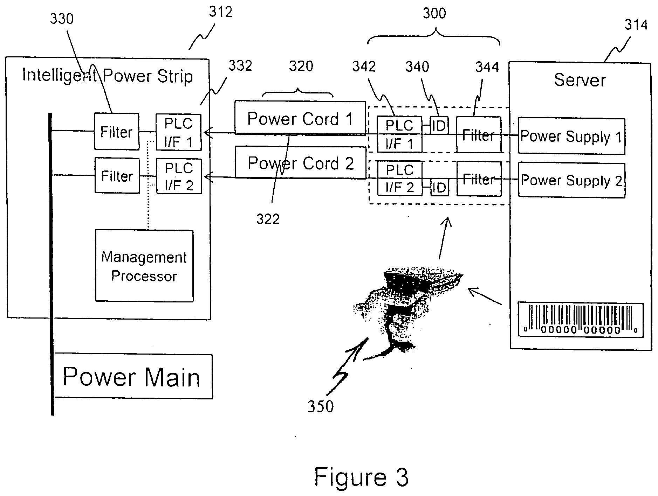

Referring to Fig. 3, there is shown another exemplary embodiment of a system 300 and method for improved association between an intelligent power distribution unit 312 and a target device 314. As in the systems described in respect to Figs. 1 and 2, the system 300 of Fig. 3 makes use of an ID device 340 that is coupled to the power cable 320 and is located proximate the target device 314. The embodiment of Fig. 3 differs, however, in that communication between the intelligent power distribution unit 312 and ID device 340 takes place via the actual power conductors 322 of the power cable 320. For this solution, each outlet on the power strip has the ability to communicate through its corresponding socket over the power conductors 322. At the power distribution unit, a filter 330 is installed "behind" the power line communications interface 332 to keep each communication link isolated from each other (rather than colliding on the power main). The power line communications interface 332 enables data to be received over the power line connection and input to the management processor 328 of the intelligent power distribution unit. This can be accomplished, for example, through the use of a power line modem or other like device that provides isolation from the power system and enables a digital data protocol to be received at the management processor. An example of a suitable power line communications interface can be found in the PlugLink product line from Asoka USA Corporation.

On the target (or server) side of the power cable 320, a complementary interface 342 is provided as part of a pass-through device 344 for each power input of a device, where, as would be understood, many devices support multiple power inputs, either for load sharing or for redundancy purposes. An ID device 340 or other like memory component within the pass-through device 344 is programmed with the server identification information (and perhaps the power input number) by way of an input device 350, such as a bar code scanner, as described with respect to Fig. 1. When power is turned on, the power distribution unit 312 queries the ID device 340 at the target device 314, and obtains the server identification. At this point, the outlet identification and the target device identification are both known by the outlet strip. The association may be kept internal to the strip or forwarded to a centralized management system.

In alternate operation for the system of Fig. 3, the power distribution unit 312 can also push its identification information over to the ID device 340 as described with respect to Fig. 2. An association between the server information and the information captured from the ID device would then be made via a handheld device as previously described. The association information as captured by the device would then be downloaded or transferred for use by a management system.

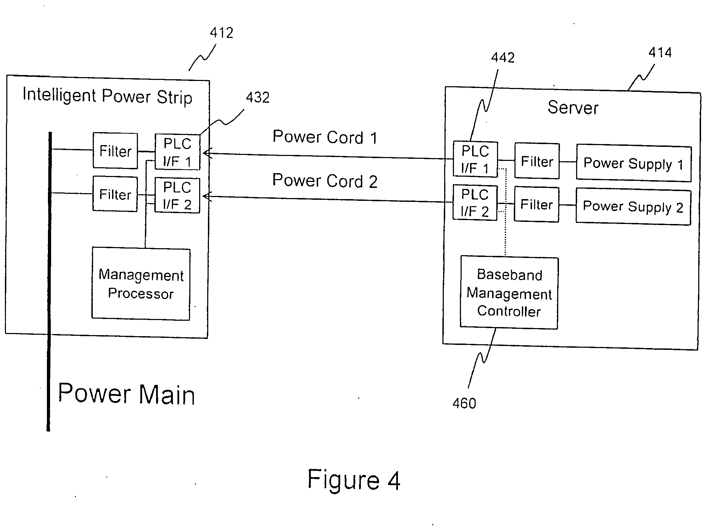

Referring to Fig. 4, another alternate embodiment of the present invention is shown. In this approach, power line communications is again employed to transmit target identifying information to the power distribution unit 412, across a standard power cord 412. At the power distribution unit 412, the power line interface 432 is similar to the interface described with respect to Fig. 3.

Rather than a pass-through device, however, a complementary power line interface 442 is provided within the server or other target device 414 on each power input. Each interface includes memory and is provided with the server identification information, and the power input number from a location within the target device, for example, the Baseband Management Controller 460. Alternately, the server identification information would be embedded or stored within the power supply, if for example, these power supplies were not swappable at the target device.

When power is turned on, the power strip queries the target device, and obtains the server identification from the interface 442 of the target device 414. At this point, the outlet identification and the target device identification are both known by the power distribution unit (e.g., outlet strip). As with certain other embodiments of the invention, the association may be kept internal to the strip or forwarded to a centralized management system.

This solution offers the benefit of being fully automatic. All an installer needs to do is plug the system together and automatic association between the target device and power distribution unit will occur. A drawback to this implementation is that it will only work properly if the target device manufacturer includes this functionality in its product.

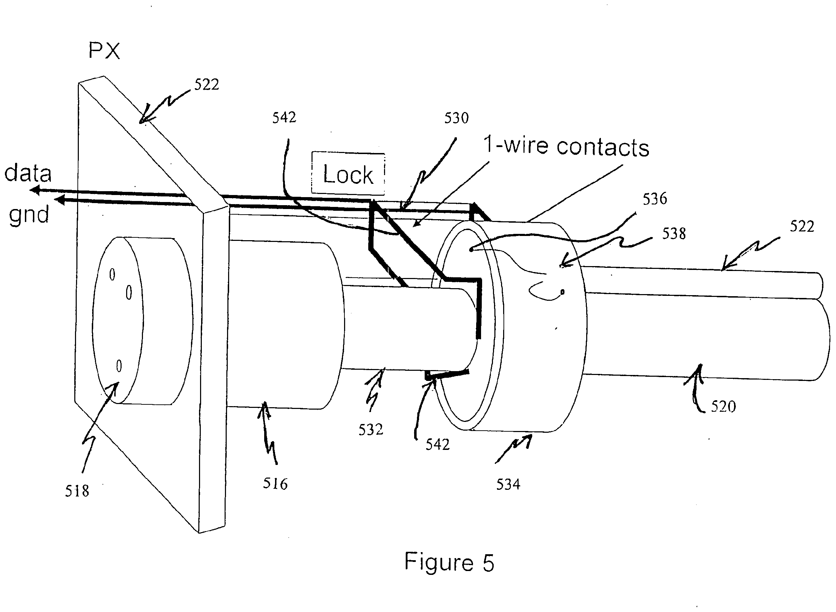

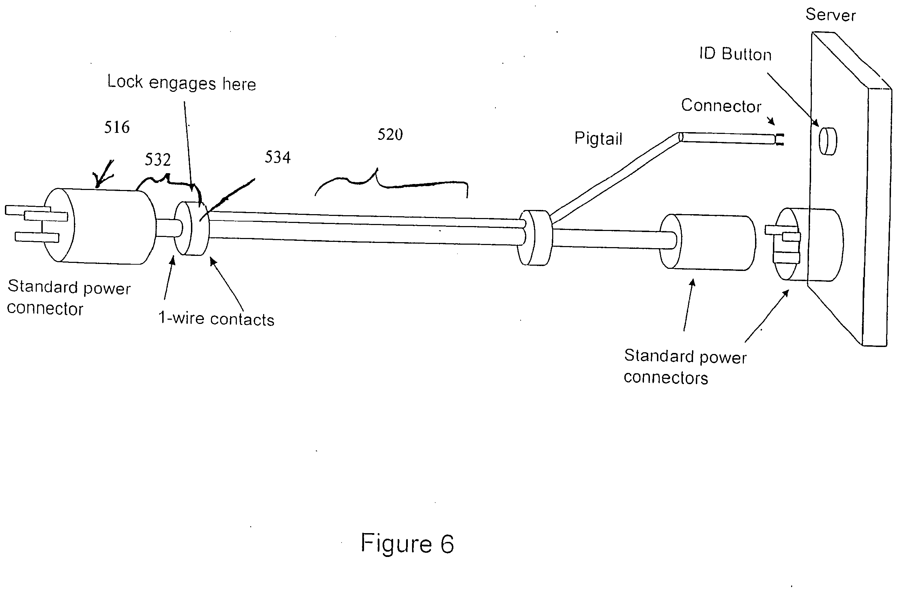

Referring to Fig. 5 in combination with Fig. 6, there is shown one exemplary embodiment of a coupling mechanism 500 between the power cable 520 of the present invention and the power distribution unit 512 that is particularly applicable to the embodiments described with respect to Figs. 1 and 2. A male connector 516 is shown having a conventional three prong arrangement that is insertable into a conventional 110V North American outlet 518. The power cable 520 in proximity to the male connector 516, however, includes a specialized collar 532 that is adapted to couple with a latch or lock mechanism 522 from the PDU. As shown, the power cable 520 of the present invention includes two sets of conductors, data conductors 530 and power conductors 524, each of which are separately contained in insulation. On the PDU side of the power cable, the data conductors terminate within a two sided disc housing 534 for containing two conductive discs 536, 538. Each of the data conductors 530 (e.g., data and ground) is electrically coupled to one of the conductive discs.

The latch portion 522 of the coupling mechanism 500 includes two sets of opposing contacts 542 that slip over the insulated power cable 520 and which have a number of points 544 along the contacts 542 that electrically couple to the electrically conductive discs 536, 538 in order to electrically connect the data conductors 530 with the controller of the PDU 512. The data conductors of the latch mechanism 522 which couple with respective sets of contacts 542 are included within or connected to the latch so that the data conductor may electrically couple to the controller within the PDU 512. The latch mechanism 522 of the PDU has a pivot proximate its connection at the PDU. The pivot allows the latch to be maneuvered on and off of the collar 532 of the power cable 520 when the connector 516 of the power cable needs to be inserted or removed from a power receptacle of the PDU 512.

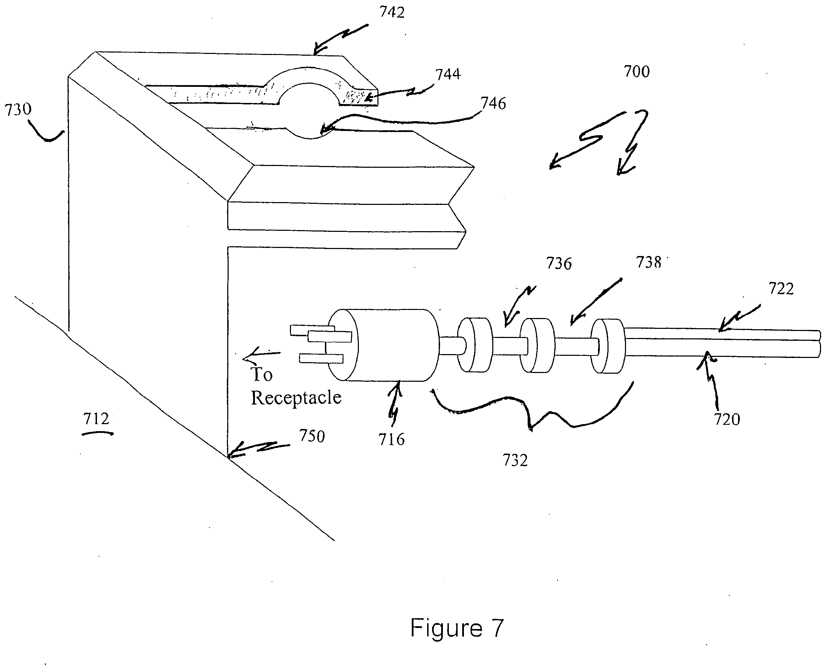

Referring to Figure 7, another embodiment of a coupling mechanism 700 for connecting the power cable of the present invention with an intelligent power distribution unit is shown. The male connector 716 includes a specialized collar 732 that is adapted to couple with the latch or lock mechanism 730 from the PDU. As shown, the collar includes two separate slots 736, 738 having electrically conductive material surrounding at least portions thereof. The conductive material of the slots electrically couples to respective ones of the data conductors 722 that are included within the cable 720.

The latch portion 730 of the coupling mechanism 700 includes a specialized connector 742 that is adapted to be received and couple with the corresponding slots 736, 738 of the power cable. The latch 730 includes a slotted opening 740 that fits over and maintains a force fit connection with the conductive material 742 found in the corresponding slots 736, 738 of the power cable collar. The latch has separate corresponding conductors 744, 746 that make contact with the conductive slots in a manner similar to that of an insulation displacement (IDC) connector. The conductors of the latch mechanism are included within or connected to the latch so that the data conductor may electrically couple to the controller within the PDU. The latch mechanism of the PDU has a pivot 750 proximate its connection at the PDU. The pivot 750 allows the latch to be maneuvered on and off of the collar 732 of the power cable when the connector 716 of the power cable needs to be inserted or removed from a power receptacle of the PDU.

In other alternate embodiments of the present invention, the power cable of the present invention having additional conductors for providing the identification information to the intelligent power distribution unit may couple to the power distribution unit in the power connector region using additional prongs that are insertable into an outlet region. Alternately, complimentary contacts or tabs may also be included in or around the power connector region in order to couple the additional conductors to the power distribution unit. In addition, although a single wire interface is preferable in order to limit the number of conductors that must be present in the power cable, it would be understood that additional conductors may be utilized within the power cable in order to make use of conventional data transmission protocols.

The foregoing description merely illustrates the principles of the invention. It will thus be appreciated that those skilled in the art will be able to devise various arrangements, which, although not explicitly described or shown herein, embody the principles of the invention, and are included within its scope. Furthermore, all examples and conditional language recited are principally intended expressly to be only for instructive purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein. Many other modifications and applications of the principles of the invention will be apparent to those skilled in the art and are contemplated by the teachings herein. Accordingly, the scope of the invention is limited only by the claims.

## Claims

1. A system for associating a target device (214) having power supplied by an intelligent power distribution unit (212) with a power outlet, said system comprising:
a specific power outlet of the intelligent power distribution unit (212);
an identification device (240) attached to said target device; and
a power cable (220) extending from said specific outlet of said power distribution unit to said target device, said power cable (220) configured to supply power from said specific outlet to said target device, and configured to provide a communication channel for transmitting identification information of said specific outlet to said identification device (240), wherein the identification device (240) is in electrical communication with the power cable (220), **CHARACTERISED BY**:
a scanner (250) configured to receive identification information of said target device (214)
from said target device (214) and said identification information of said specific outlet from said identification device (240) and configured to make an association therein, wherein
information regarding said association is electronically transferable by the scanner to a management system (270) for use in monitoring said intelligent power distribution unit.

2. The system of claim 1, wherein said power distribution unit (212) is operable tn provide indentification infnrmatinn tn said identification device (240)

3. The system of claim 1, wherein said power cable (220) includes a selectively operable visual or audible indicator at a target end thereof.

4. The system of claim 1, further comprising
a connector (516) on said cable (220, 520) at a power distribution unit end of said cable (220, 520), wherein at least one conductor of said cable (220, 520) is configured to couple to said power distribution unit via a lock apparatus adjacent to an AC power connection (518) of said connector (516) at said power distribution unit.

5. The system of claim 1, wherein the scanner (250) comprises:
a bar code reader used to read a bar code attached to said electrical device.

6. The system of claim 1, wherein the power cable (220) comprises conductor cables supplying electrical current from said outlet to said electrical device; and
at least one data conduction wire located within a power cord used to connect said target device to said outlet for providing the communication channel.

7. The system of claim 2, said power distribution unit (212) further comprising:
a management module (28) having a processor and associated memory for storing said identification information; and
a latch unit located adjacent to electrical outlets thereof for coupling with a portion (536, 538) of said cable (220, 520) in order to electrically couple at least one additional conductor of said cable (220, 520) to said management module (28).

8. A method of making an association between a target device (214) and a specific electrical outlet of an intelligent power distribution unit (212) providing power to said target device (214), said method comprising:
communicating identification information for said specific electrical outlet over a cable (220) that supplies power to said target device (214) from said specific electrical outlet;
storing said identification information for said specific electrical outlet at an identification device (240) in electrical communication with said cable (220) and attached to said target device (214); and
receiving identification information of said target device (214) from said target device (214) and said identification information of said specific outlet from said identification device (240) at a scanner (250) and making an association therein;
wherein information regarding said association is electronically transferable by the scanner (250) to a management system (270) for use in monitoring said intelligent power distribution unit.

## Patentansprüche

1. System zum Assoziieren eines Zielgeräts (214), das Strom von einer intelligenten Stromverteilereinheit (212) bezieht, mit einer Steckdose, besagtes System umfassend:
eine spezifische Steckdose der intelligenten Stromverteilereinheit (212);
ein Identifikationsgerät (240) angefügt an besagtes Zielgerät; und
ein Stromkabel (220), das sich von besagter spezifischer Steckdose der besagten Stromverteilungseinheit zu besagtem Zielgerät erstreckt, welches besagte Stromkabel (220) konfiguriert ist, besagtes Zielgerät von besagter spezifischer Steckdose mit Strom zu versorgen, und welches konfiguriert ist, einen Kommunikationsweg zur Übertragung von Identifikationsinformation besagter spezifischer Steckdose an besagtes Identifikationsgerät (240) bereitzustellen, wobei das Identifikationsgerät (240) in elektrischer Kommunikation mit dem Stromkabel (220) steht,
**DADURCH GEKENNZEICHNET, DASS**:
ein Scanner (250) konfiguriert ist, Identifikationsinformation des besagten Zielgeräts (214) von besagtem Zielgerät (214) und besagte Identifikationsinformation der besagten spezifischen Steckdose von besagtem Identifikationsgerät (240) zu empfangen, und konfiguriert ist, darin eine Assoziierung zu erstellen, wobei Information betreffs besagter Assoziierung elektronisch übertragbar durch den Scanner zu einem Verwaltungssystem (270) zur Verwendung in der Überwachung besagter intelligenter Stromverteilungseinheit ist.

2. System nach Anspruch 1, wobei besagte Stromverteilungseinheit (212) veranlasst werden kann, Identifikationsinformation an besagtes Identifikationsgerät (240) zu liefern.

3. System nach Anspruch 1, wobei besagtes Stromkabel (220) eine selektiv ansteuerbare visuelle oder hörbare Anzeige an einem Zielende desselben einschließt.

4. System nach Anspruch 1, des weiteren umfassend
einen Stecker (516) an besagtem Kabel (220, 520) an einem Stromverteilungseinheitsende des besagten Kabels (220, 520), wobei mindestens ein Leiter des besagten Kabels (220, 520) konfiguriert ist, an besagte Stromverteilungseinheit über eine Verschlussvorrichtung anzukoppeln, die an einem Wechselstromanschluss (518) des besagten Steckers (516) an besagter Stromverteilungseinheit anliegt.

5. System nach Anspruch 1, wobei der Scanner (250) umfasst:
einen Barcodeleser zum Lesen eines an besagtem elektrischen Gerät angebrachten Barcodes.

6. System nach Anspruch 1, wobei das Stromkabel (220) umfasst:
Leiterkabel zur Zufuhr von elektrischem Strom von besagter Steckdose an besagtes elektrisches Gerät; und
mindestens einen innerhalb eines Stromkabels gelegenen Datenleitungsdraht, welcher zum Anschluss besagten Zielgeräts an besagte Steckdose benutzt wird, um den Kommunikationsweg bereitzustellen.

7. System nach Anspruch 2, besagte Stromverteilungseinheit (212) des weiteren umfassend:
ein Verwaltungsmodul (28), das einen Prozessor und zugeordneten Speicher zum Speichern besagter Identifikationsinformation aufweist; und
eine Verriegelungseinheit platziert neben den elektrischen Steckdosen derselben zum Koppeln mit einem Teil (536, 538) des besagten Kabels (220, 520), um mindestens einen zusätzlichen Leiter besagten Kabels (220, 520) an besagtem Verwaltungsmodul (28) elektrisch anzukoppeln.

8. Verfahren zum Erstellen einer Assoziierung zwischen einem Zielgerät (214) und einer spezifischen elektrischen Steckdose einer intelligenten Stromverteilungseinheit (212), welche Strom an besagtes Zielgerät (214) liefert, besagtes Verfahren umfassend:
Kommunikation von Identifikationsinformation für besagte spezifische elektrische Steckdose über ein Kabel (220), das Strom an besagtes Zielgerät (214) von besagter spezifischer elektrischer Steckdose zuführt;
Speicherung besagter Identifikationsinformation für besagte spezifische elektrische Steckdose in einem Identifikationsgerät (240) in elektrischer Kommunikation mit besagtem Kabel (220) und angefügt an besagtem Zielgerät (214); und
Empfang von Identifikationsinformation des besagten Zielgeräts (214) von besagtem Zielgerät (214) und von besagter Identifikationsinformation der besagten spezifischen Steckdose von besagtem Identifikationsgerät (240) bei einem Scanner (250) und Erstellung einer Assoziierung darin;
wobei Information betreffs besagter Assoziierung elektronisch übertragbar durch den Scanner (250) zu einem Verwaltungssystem (270) zur Verwendung in der Überwachung besagter intelligenter Stromverteilungseinheit ist.

## Revendications

1. Système d'association d'un dispositif cible (214) dont la puissance est alimentée par une unité de distribution de puissance intelligente (212) à une prise de courant, ledit système comprenant :
une prise de courant spécifique de l'unité de distribution de puissance intelligente (212) ;
un dispositif d'identification (240) rattaché audit dispositif cible ; et
un câble d'alimentation (220) s'étendant depuis ladite prise spécifique de ladite unité de distribution de puissance jusqu'audit dispositif cible, ledit câble d'alimentation (220) étant configuré pour fournir une puissance depuis ladite prise spécifique audit dispositif cible, et configuré pour fournir un canal de communication en vue de transmettre des informations d'identification de ladite prise spécifique audit dispositif d'identification (240), dans lequel le dispositif d'identification (240) est en communication électrique avec le câble d'alimentation (220),
**CARACTERISE PAR** :
un scanner (250) configuré pour recevoir des informations d'identification dudit dispositif cible (214) depuis ledit dispositif cible (214) et lesdites informations d'identification de ladite prise spécifique depuis ledit dispositif d'identification (240) et configuré pour faire une association dans celui-ci, dans lequel les informations concernant ladite association sont transférables électroniquement par le scanner à un système de gestion (270) en vue de leur utilisation dans la surveillance de ladite unité de distribution de puissance intelligente.

2. Système selon la revendication 1, dans lequel ladite unité de distribution de puissance (212) est exploitable pour fournir des informations d'identification audit dispositif d'identification (240).

3. Système selon la revendication 1, dans lequel ledit câble d'alimentation (220) comporte un indicateur visuel ou sonore actionnable sélectivement au niveau d'une extrémité cible de celui-ci.

4. Système selon la revendication 1, comprenant en outre :
un connecteur (516) sur ledit câble (220, 520) au niveau d'une extrémité unité de distribution de puissance dudit câble (220, 520), dans lequel au moins un conducteur dudit câble (220, 520) est configuré pour un couplage à ladite unité de distribution de puissance par l'intermédiaire d'un appareil de verrouillage adjacent à une unité de puissance C.A. (518) dudit connecteur (516) au niveau de ladite unité de distribution de puissance.

5. Système selon la revendication 1, dans lequel le scanner (250) comprend :
un lecteur de code-barres servant à lire un code-barres rattaché audit dispositif électrique.

6. Système selon la revendication 1, dans lequel le câble de puissance (220) comprend des câbles conducteurs fournissant un courant électrique depuis ladite prise audit dispositif électrique ; et
au moins un fil de transmission de données situé au sein d'un cordon d'alimentation servant à connecter ledit dispositif cible à ladite prise pour fournir le canal de communication.

7. Système selon la revendication 2, ladite unité de distribution de puissance (212) comprenant en outre :
un module de gestion (28) comptant un processeur et une mémoire associée pour mémoriser lesdites informations d'identification ; et
une unité de verrouillage située adjacente aux prises électriques de celui-ci destinée à être couplée à une partie (536, 538) dudit câble (220, 520) afin de coupler électriquement au moins un conducteur supplémentaire dudit câble (220, 520) audit module de gestion (28).

8. Procédé d'établissement d'une association entre un dispositif cible (214) et une prise électrique spécifique d'une unité de distribution de puissance intelligente (212) fournissant une puissance audit dispositif cible (214), ledit procédé comprenant :
la communication d'informations d'identification de ladite prise électrique spécifique sur un câble (220) qui fournit une puissance audit dispositif cible (214) depuis ladite prise électrique spécifique ;
la mémorisation desdites informations d'identification de ladite prise électrique spécifique au niveau d'un dispositif d'identification (240) en communication électrique avec ledit câble (220) et rattaché audit dispositif cible (214) ; et
la réception d'informations d'identification dudit dispositif cible (214) depuis ledit dispositif cible (214) et desdites informations d'identification de ladite prise spécifique depuis ledit dispositif d'identification (240) au niveau d'un scanner (250) et l'établissement d'une association dans celui-ci ;
dans lequel des informations concernant ladite association peuvent être transférées électroniquement par le scanner (250) à un système de gestion (270) en vue de leur utilisation dans la surveillance de ladite unité de distribution de puissance intelligente.
